Europäisches Patentamt

European Patent Office

Office européen des brevets

(11) Publication number: **0 074 714**
**A2**

(12) EUROPEAN PATENT APPLICATION

(21) Application number: **82304180.1**

(22) Date of filing: **09.08.82**

(51) Int. Cl.³: **H 01 B 7/28**
**G 02 B 5/16**

(30) Priority: **10.09.81 US 300789**

(43) Date of publication of application:
**23.03.83 Bulletin 83/12**

(84) Designated Contracting States:
**BE DE FR GB IT NL SE**

(71) Applicant: **Sun Tech, Inc.**
**1801 Market Street**
**Philadelphia, PA 19103(US)**

(72) Inventor: **Stenger, Richard J.**
**51 Baynard Blvd**
**Wilmington Delaware 19803(US)**

(74) Representative: **Lewin, John Harvey et al,**
**Elkington and Fife High Holborn House 52/54 High**
**Holborn**
**London WC1V 6SH(GB)**

(54) Improved filling material for cables.

(57) A cable fill composition comprises a paraffinic or naphthenic oil, a styrene-ethylene butylene-styrene block copolymer, and a linear polyethylene wax having a molecular weight of about 1000, whereby an improved drip point of the composition is obtained. The composition is suitable for filling voids in electrical and light-conducting cables.

EP 0 074 714 A2

IMPROVED FILLING MATERIAL FOR CABLES

This invention relates to an improved filling material for cables.

In the disclosure of U.S. Patent No. 4,176,240, and U.S. Patent No. 4,259,540, which disclosures are hereby incorporated by reference, a filling material for electrical and light-conducting cable is described which provides waterproofing for underground telephone cable. The composition described in U.S. Patent No. 4,176,240 for that use is said to comprise three components: (1) ASTM Type 104 A (napthenic) oil having a minimum sp. gr. of 0.860, a minimum SUS viscosity at 98.9°C (210 degrees F.) of 45, a maximum pour point ASTM D 97 of -12.2°C (10 degrees F.) and a maximum of 5 percent aromatic oils; (2) a styrene-ethylene butylene-styrene block copolymer having a styrene-rubber ratio of approximately 0.4; and (3) a polyethylene having a softening point of 110 degrees C. to 130 degrees C. The composition of U.S. Patent No. 4,259,540 is similar, but the oil may be paraffinic or naphthenic with a somewhat higher maximum pour point and the block copolymer styrene-rubber ratio may be from approximately 0.2 to 0.5.

Such cable fill compositions as described in the above mentioned patents are deficient in use in that they have two severely limiting properties; namely: (1) when the temperature approaches 65.6°C (150°F.) the fill material drips out of the cable, and (2) the temperature at which the cable is filled is limited to 110°C (230°F.) because of the potential damage to the polyethylene insulation at a higher temperature, but even at this temperature the viscosity of the prior art cable fill is not sufficiently low (i.e., fluid) to ensure that all of the crevices in the bundle of wires will be filled

with the waterproofing composition. This is particularly true for cable cores having 500 or more wire pairs. This invention increases the utility of a gelled oil composition significantly, not only making it suitable for cable makers who require at least 76.7°C (170°F.) drip temperature, but since the viscosity of the improved composition is about one-half of that of the prior art composition at the filling temperature, greater assurance is obtained that the cables will be completely filled and the risk of damaging insulation during filling is also reduced since lower fill temperatures can be used. In addition, this invention enables cables with a large number of wire pairs to be filled reliably without the need to preheat the core as is sometimes done in using the gels available heretofore.

The present invention thus provides a cable fill composition comprising

(X) ASTM Type 103, 104A, or 104B, or mixtures thereof (paraffinic or naphthenic) oil having a minimum sp. gr. of 0.860, a minimum SUS viscosity at 98.9°C (210 degrees F.) of 45, a maximum pour point ASTM D 97 of -6.7°C (20 degrees F.) and a maximum of 5 percent aromatic oils;

(Y) a styrene-ethylene butylene-styrene block copolymer having a styrene-rubber ratio of approximately 0.2 to 0.5; and

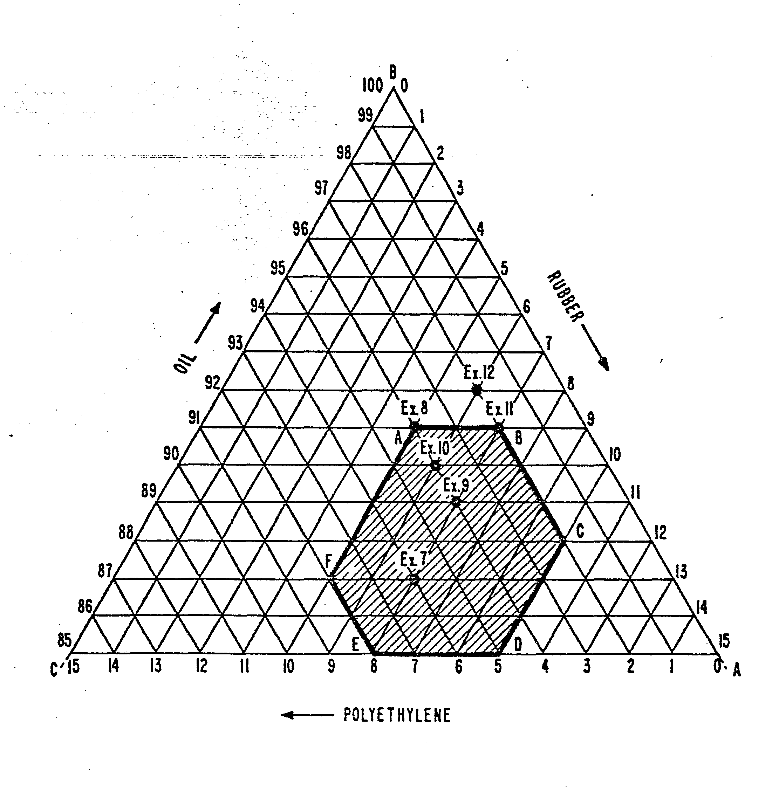

(Z) a linear polyethylene wax having a molecular weight of about 1000, the ingredients X, Y and Z having relative proportions falling within the shaded area bounded by ABCDEF of the accompanying drawing.

The invention also provides a cable comprising a plurality of conductors contained within a sheath leaving voids between the conductors, and between the conductors and the sheath, and a filling material filling the voids, characterized in that the filling material is a composition as defined above.

The styrene-ethylene butylene-styrene block copolymer preferably has a styrene-rubber ratio of approximately 0.4.

The polyethylene wax has a viscosity of about 13 cps at 140°C, a rather sharp melting point of from about 110 to 113°C (230° to 235°F.), a density of about 0.96 and will have a comparative narrow molecular weight distribution as compared to the poly- ethylene wax disclosed in U.S. Patent No. 4,176,240. Such a wax is commercially available as Polywax 1000 from the Bareco Division of Petrolite Corporation and it is the use of such a linear polyethylene wax which imparts the improved properties to the composition of the invention.

Reference is now made to the accompanying drawing, which is a ternary compositional diagram taken from U.S. Patent No. 4,176,240 giving the composition ranges of the cable filling material of the invention.

A typical composition of the invention will have the following formulation:

| | |
|---|---|
| 89% | 175 SUS/100F Paraffin Oil |
| 5% | Bareco Polywax 1000; Linear, narrow M.W. Polyethylene |
| 6% | Kraton 1652 Rubber, block copolymer. |

This composition is characterized in its viscosity and drip temperature and compared with the properties of the prior art cable fill composition in the following table:

Properties of Gelled
Oil Filling Compound

|  | Prior-Art[+] | This invention |
|---|---|---|
| Brookfield Viscosity, cP | | |
| 93°C (200F) | 200+ | 83 |
| 99°C (210F) | 80 | 47 |
| 104°C (220F) | 60 | 37 |
| 110°C (230F) | 45 | 32 |
| 116°C (240F) | 37 | 28 |
| 130°C (266F) | 30 | 22 |
| Drip Temp,* C(F) | 66-67 (150-152) | 79+(175+) |

*Determined by holding a 20 g. sample in a 7.6 cm (3")
diameter dish vertically in a forced air oven for 12
hours.

+ Using the polyethylene disclosed in U.S. Patent
Nos. 4,176,240 and 4,259,540.

As can be seen, the viscosity of the
composition of this invention is significantly lower
and the drip temperature is significantly higher than
the prior art composition.

The proportions of paraffin oil, linear
polyethylene, and rubber for the composition of the
invention will be the same as that disclosed in U.S.
Patents Nos. 4,176,240 and 4,259,540 which is defined
by the shaded area bounded by ABCDEF of the figures
of those patents. Preferably, however, the amount of
paraffin oil will be from about 85% to about 90%,
the amount of linear polyethylene will be from about
4% to about 6% and the amount of block copolymer
will be from about 5% to about 8%.

The cable fill composition of the invention
is readily used in the conventional electrical and light conducting cable filling operations used in the industry. One much used technique is a pressure filling technique where the completed core, without wrap is passed through a tube 0.61 to 1.83 m (2 to 6 feet) long. The molten gelled oil compound is forced into the core as it passes through. Chilled sections on each end prevent molten material from squirting out. Some techniques apply vacuum just ahead of the pressure sections.

If it is difficult to force the filling material into the centre of large pair count fine gauge cores a separation device which spreads the units apart in the pressure tube may be used.

The most desirable place to fill is at the sheathing line. However, filling at the stranding line can be done satisfactorily if a wrapping is applied to contain the filler. The filled core, of course, must then be wound on a reel and then unwound as it is sheathed.

When the above described cable fill is used in the pressure fill technique described above, a filled cable is obtained which is completely filled with gel, exhibits no drip problems below 76.7°C (170°F.) and also meets all of the tests necessary for high performance; e.g. electrical resistance, water resistance, and the like.

-6-

Claims:

1. A cable fill composition comprising

   (X) ASTM Type 103, 104A, or 104B, or mixtures thereof (paraffinic or naphthenic) oil having a minimum sp. gr. of 0.860, a minimum SUS viscosity at 98.9°C (210 degrees F.) of 45, a maximum pour point ASTM D 97 of -6.7°C (20 degrees F.) and a maximum of 5 percent aromatic oils;

   (Y) a styrene-ethylene butylene-styrene block copolymer having a styrene-rubber ratio of approximately 0.2 to 0.5; and

   (Z) a linear polyethylene wax having a molecular weight of about 1000, the ingredients X, Y and Z having relative proportions falling within the shaded area bounded by ABCDEF of the accompanying drawing.

2. A composition as claimed in claim 1, wherein the amount of (X) is from 85% to 90%, the amount of (Y) is from 5% to 8% and the amount of (Z) is from 4% to 6%.

3. A composition as claimed in claim 2, wherein the amount of (X) is about 89%, the amount of (Y) is about 6% and the amount of (Z) is about 5%.

4. A composition as claimed in any of claims 1 to 3, wherein component (X) has a pour point ASTM 97 of -17.8°C (zero degrees F.); a SUS viscosity at 98.9°C (210°F) of S-3.7; a sp. gr. (ave.) of 0.884; and a maximum aromatic oils of 1%.

5.        A composition as claimed in any of claims 1 to 4, wherein the styrene-rubber ratio in component (Y) is approximately 0.4

6.        A cable comprising a plurality of conductors contained within a sheath leaving voids between the conductors, and between the conductors and the sheath, and a filling material filling the voids, characterized in that the filling material is a composition as claimed in any of claims 1 to 5.

7.        The cable of claim 6 in which the conductors are electrical conductors.

8.        The cable of claim 6 in which the conductors are light conductors.